# EUROPEAN PATENT SPECIFICATION

(11) **EP 1 614 493 B1**
(45) Date of publication and mention of the grant of the patent: **17.10.2007**
(21) Application number: 05013911.2
(22) Date of filing: 28.06.2005
(51) Int. Cl.: B23D 47/02, B27B 5/16

(54) **Miter saw with a rotatable table**
Gehrungssäge mit einem drehbaren Tisch
Scie à onglet avec une table tournante

(30) Priority: 08.07.2004 US 586268 P
(43) Date of publication of application: 11.01.2006
(73) Proprietor: Black & Decker Inc., Newark, Delaware 19711 (US)
(72) Inventor: Gehret, Robert S., Hampstead, Maryland 21074 (US); Embree, Paul M., Baltimore, Maryland 21244 (US)
(74) Representative: Bell, Ian Stephen

(56) References cited:
- EP-A- 0 642 895
- DE-A1- 3 127 217
- US-A- 4 916 994
- US-B1- 6 289 778

## Description

This invention relates generally to a table assembly for a miter saw and more specifically to a table assembly for a combination table/miter saw.

Typical miter saws have a table that is rotatable relative to a base assembly. It is an object of the invention to provide a rotatable table assembly that can support a workpiece used on both sides of the table assembly in a combination table/miter saw.

Examples of the prior art are disclosed in European Patent publication number EP0642895 and US Patent Nos. 6289778 and 4916994.

According to the present invention, there is provided a saw comprising:
a base assembly;
a fixed table supported by the base assembly,
a rotatable table rotatably disposed on the fixed table; and
a saw assembly supported by the rotatable table;
wherein one of the fixed and rotatable tables has a lip and the other of the fixed and rotatable tables has a flange overlapping the lip, the lip being disposed between the flange and a plate disposed on the other of the fixed and rotatable tables characterized by a wear pad assembly disposed on at least one of the fixed and rotatable tables, the wear pad assembly comprising an adjustable body.

In accordance with the present invention, an improved table assembly is employed. The power tool has a base assembly, a fixed table supported by the base assembly, a rotatable table rotatably disposed on the fixed table, and a saw assembly supported by the rotatable table, wherein one of the fixed and rotatable tables has a lip and the other of the fixed and rotatable tables has a flange overlapping the lip, the lip being disposed between the flange and a plate disposed on the other of the fixed and rotatable tables.

Additional features and benefits of the present invention are described, and will be apparent from, the accompanying drawings and the detailed description below.
The accompanying drawings illustrate preferred embodiments of the invention according to the practical application of the principles thereof, and in which:
FIG. 1 illustrates a combination table/miter saw according to the invention, whereas FIGS. 1A-1B are side views of the combination table/miter saw in the miter saw and table saw modes, respectively;
FIG. 2 is a bottom view of the table assembly according to the invention when the combination table/miter saw is in the table saw mode shown in FIG. 1B;
FIG. 3 is a partial cross-sectional view along line A-A of FIG. 2;
FIG. 4 is a bottom plan view of a first embodiment of a wear pad assembly according to the invention;
FIG. 5 is a bottom plan view of a second embodiment of a wear pad assembly according to the invention;
FIG. 6 illustrates a wear pad according to the invention, where FIG. 6A is a bottom plan view and FIG. 6B is a side view along line B-B of FIG. 6A; and
FIG. 7 is a partial perspective of the wear pad of FIG. 6 during use.

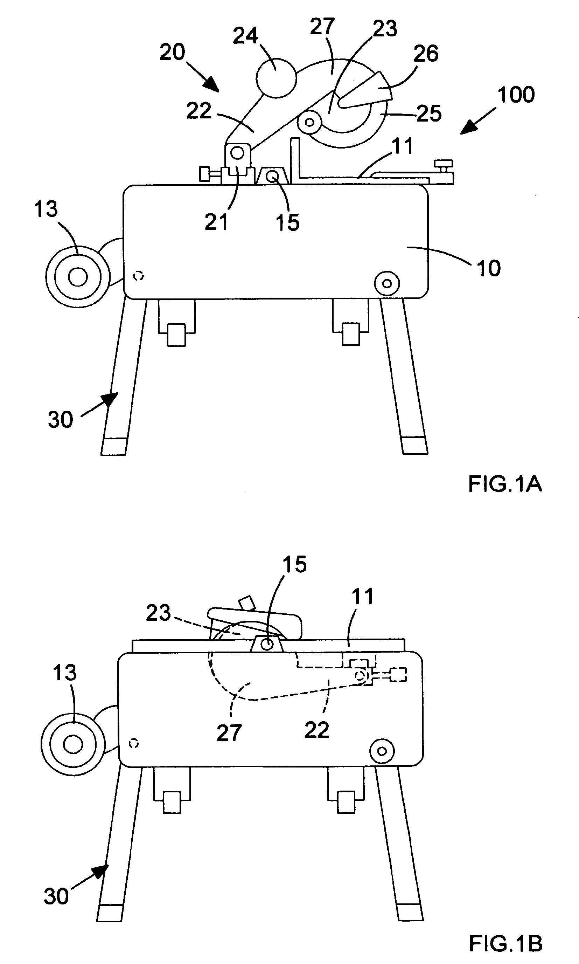

The invention is now described with reference to the accompanying figures, wherein like numerals designate like parts. Referring to FIG. 1, a combination table/miter saw 100 may include a base assembly 10, a table assembly 11 supported by base assembly 10, and a saw assembly 20 supported by the table assembly 11. Saw assembly 20 may include a trunnion 21 disposed on the table assembly 11, a pivotable arm 22 pivotably attached to trunnion 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25.

Preferably, table assembly 11 is pivotally attached to base assembly 10 via joint 15 so that, when the table assembly 11 is in the orientation of FIG. 1A, the saw assembly 20 can act as a miter saw, i.e., saw assembly 20 can be pivoted downwardly towards table assembly 11 to cut a workpiece placed on table assembly 11.

On the other hand, when table assembly 11 is rotated via joint 15 to the orientation of FIG. 1B, the saw 100 acts as a table saw, i.e., saw assembly 20 will be supported by and disposed underneath the table assembly 11. In such orientation, blade 23 extends through the table assembly 11, so that a user can dispose a workpiece on table assembly 11 and push it towards blade 23 for cutting.

Persons skilled in the art will recognize that the invention described below can be applicable to non-combined miter saws.

Preferably, base assembly 10 has at least one wheel 13 thereon.

Base assembly 10 may also support four leg assemblies 30. Preferably leg assemblies 30 are pivotally attached to base assembly 10.

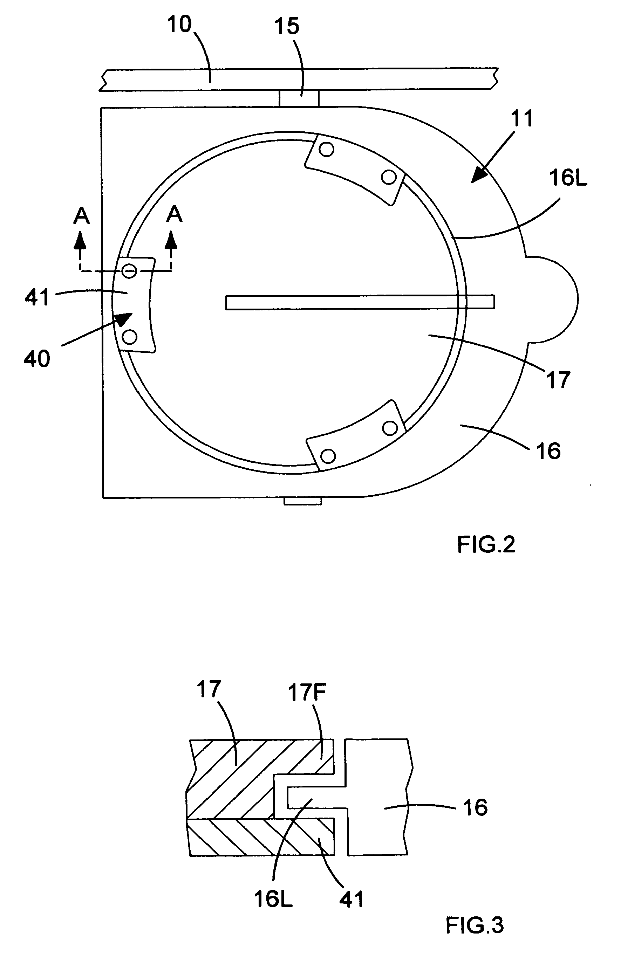

Because the saw 100 can be used as either a table saw or a miter saw, it is preferable to provide a table assembly 11 which can support a workpiece on both sides of table assembly 11. Referring to FIG. 2, table assembly 11 comprises a fixed table 16 which is connected to joint 15, and a rotatable table 17 rotatably disposed on fixed table 16. Persons skilled in the art will recognize that saw assembly 20 will be preferably disposed on rotatable 17 so that saw assembly 20 can be mitered when in the miter saw mode.

Referring to FIGS. 2-3, fixed table 16 may have a lip 16L. In turn, rotatable 17 may have a flange 17F. Flange 17F may rest on lip 16L when saw 100 is in miter saw mode.

At least one plate 41 may be attached to the underside of mtatable table 17, for sandwiching lip 16L between plate 41 and flange 17L. Persons skilled in the art will recognize that plate 41 will on rest lip 16L when saw 100 is in table saw mode.

Plate 41 is preferably part of a wear pad assembly 40. Rotatable table 17 may have at least two and preferably three wear pad assemblies 40.

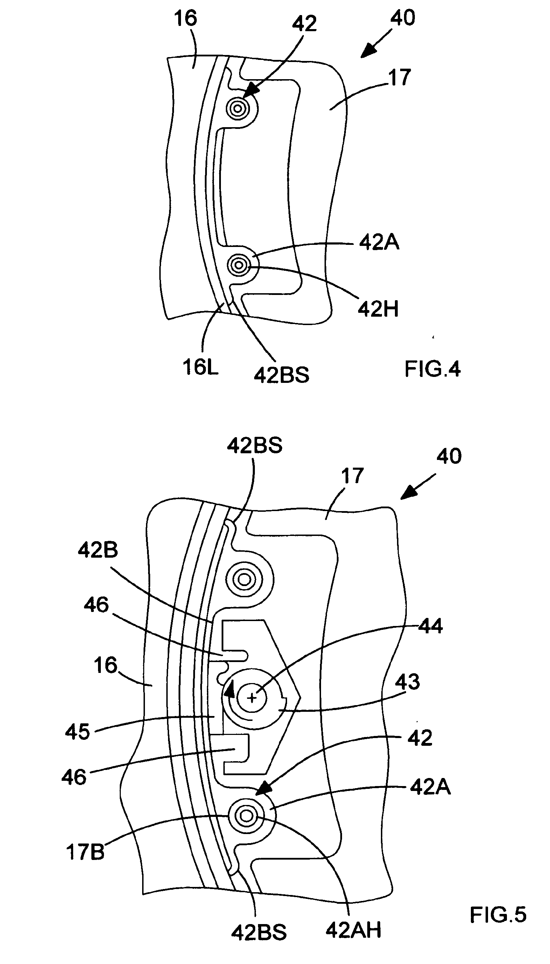

A first embodiment of wear pad assembly 40 is shown in FIG. 4. Persons skilled in the art will understand that FIG. 4 does not show plate 41.

Referring to FIGS. 4 and 6-7, wear pad assembly 40 includes a wear pad 42. Wear pad 42 may be made of plastic and is preferably resilient.

Wear pad 42 may have a body 42B and attachment flanges 42A connected to body 42B. The attachment flanges 42A preferably have holes 42AH for receiving a screw therethrough for fixing the body 42 to rotatable table 17. Persons skilled in the art will recognize that such fixing screw may be the same screw used to attach plate 41 to rotatable table 17. Alternatively, holes 42AH may receive a screw boss 17B therethrough, which in turn is threadingly engaged to said fixing screw.

Body 42B may have a pad surface 42BP which contacts the vertical wall of lip 16L to lower friction between fixed and rotatable tables 16, 17. Similarly, body 42B may have a flange 42F which may contact a horizontal wall of lip 16L to lower friction between fixed and rotatable tables 16, 17.

Body 42B may have a slot 42S between pad surface 42BP and flange 42F. Slot 42S preferably allows the pad surface 42BP and flange 42F to independently contact the vertical and horizontal walls of lip 16L, respectively.

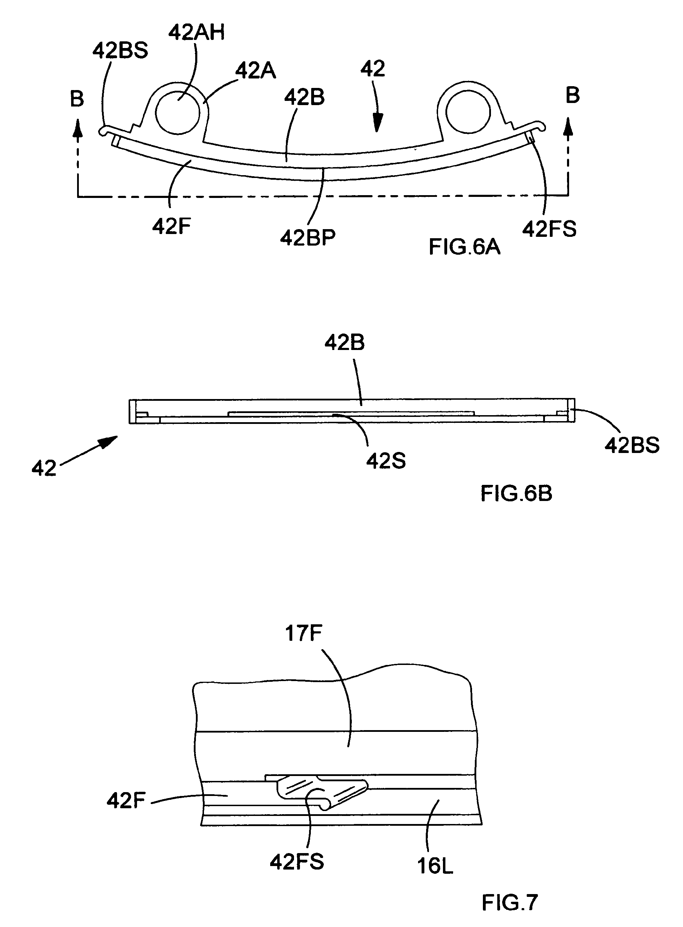

Body 42B may have scraping flanges 42BS extending forwardly at each end of pad surface 42BP. Furthermore, flange 42F may have scraping flanges 42FS extending vertically at each end of flange 42F. Preferably, scraping flanges 42BS and 42FS contact lip 16L. Scraping flanges 42BS preferably contact the vertical wall of lip 16L (see FIG. 4), whereas scraping flanges 42FS preferably contact the horizontal wall of lip 16L (see FIG. 7). Such scraping flanges 42BS, 42FS preferably push dust off lip 16L when rotatable table 17 is moved relative to fixed table 16, i.e., when saw assembly 20 is mitered. With such arrangement, dust disposed between fixed and rotatable tables 16, 17 is removed to minimize binding therebetween.

A second embodiment of wear pad assembly 40 is shown in FIG. 5, where like numerals refer to like parts. The teachings of the previous embodiment are hereby incorporated in whole by reference. The main difference between the first and second embodiments of wear pad assembly 40 is that an adjustment means is provided for taking up clearances between fixed and rotatable tables 16, 17.

Referring to FIG. 5, a cam 43 may be provided on rotatable table 17. The position of cam 43 can be fixed by tightening a screw 44. Rotatable table 17 may have two ribs 46 for defining a channel. An adjustment shoe 45 may be disposed between ribs 46 for movement along the channel. Adjustment shoe 45 is disposed between body 42B and cam 43.

With such arrangement, when cam 43 is rotated, adjustment shoe 45 is moved towards body 42B, moving body 42B towards lip 16L. Such adjustment effectively changes the diameter of rotatable table 17, removing any clearances between fixed and rotatable tables 16, 17. Such lack of clearance improves miter accuracy.

Persons skilled in the art will recognize that cam 43 may be disposed to contact body 42B without adjustment shoe 45. However, adjustment shoe 45 distributes the pressure unto body 42B, increasing the life of wear pad 42.

Persons skilled in the art will recognize that it is preferable to have three wear pad assemblies 40 on rotatable table 17, where two of such assemblies are of the first embodiment and the remaining assembly is of the second embodiment.

Persons skilled in the art may recognize other additions or alternatives to the means disclosed herein. For example, lip 16L and flange 17F may be disposed on rotatable and fixed tables 17, 16, respectively. Similarly, wear pad assemblies 40 may be provided on fixed table 16 or on both fixed and rotatable tables 16, 17. However, all these additions and/or alterations are considered to be equivalents of the present invention.

## Claims

1. A saw comprising:
a base assembly (10);
a fixed table (16) supported by the base assembly;
a rotatable table (17) rotatably disposed on the fixed table; and
a saw assembly (20) supported by the rotatable table;
wherein one of the fixed and rotatable tables has a lip (16L) and the other of the fixed and rotatable tables has a flange (17L) overlapping the lip, the lip being disposed between the flange and a plate (41) disposed on the other of the fixed and rotatable tables, **characterized by** a wear pad assembly (40) disposed on at least one of the fixed and rotatable tables, the wear pad assembly comprising an adjustable body (42B).

2. The power tool of Claim 1, wherein the wear pad assembly (40) comprises a body (42B) and at least one pad surface (42BP) attached to the body.

3. The power tool of Claim 2, wherein the at least one pad surface (42BP) contacts the lip (16L).

4. The power tool of Claim 1, wherein the wear pad assembly (40) comprises a body (42B) and at least one flange (42F) attached to the body.

5. The power tool of Claim 4, wherein the at least one flange (42F) contacts the lip (16L).

6. The power tool of Claim 1, wherein the body (42B) may be adjusted by rotating a cam (43) disposed near the body.

7. The power tool of Claim 6, further comprising an adjustment shoe (45) disposed between the cam (43) and the body (42B).

## Patentansprüche

1. Säge mit
einer Basisanordnung (10),
einem von der Basisanordnung gehalterten festen Tisch (16),
einem am festen Tisch drehbar angeordneten Drehtisch (17) und
einer vom Drehtisch gehalterten Sägeanordnung (20),
wobei der eine von festem Tisch und Drehtisch eine Lippe (16L) und der andere von festem Tisch und Drehtisch einen die Lippe überlappenden Flansch (17L) aufweist und die Lippe zwischen dem Flansch und einer Platte (41) angeordnet ist, die an dem anderen von festem Tisch und Drehtisch vorgesehen ist, **gekennzeichnet durch** eine an mindestens dem einen von festem Tisch und Drehtisch angeordnete Abriebpolsteranordnung (40), die einen einstellbaren Körper (42B) aufweist.

2. Säge nach Anspruch 1, bei der die Abriebpolsteranordnung (40) einen Körper (42B) und mindestens eine am Körper angebrachte Polsterfläche (42BP) aufweist.

3. Säge nach Anspruch 2, bei der die mindestens eine Polsterfläche (42BP) die Lippe (16L) berührt.

4. Säge nach Anspruch 1, bei der die Abriebpolsteranordnung (40) einen Körper (42B) und mindestens einen am Körper angebrachten Flansch (42F) aufweist.

5. Säge nach Anspruch 4, bei der der mindestens eine Flansch (42F) die Lippe (16L) berührt.

6. Säge nach Anspruch 1, bei der der Körper (42B) durch Drehung eines nahe dem Körper angeordneten Nockens (43) eingestellt werden kann.

7. Säge nach Anspruch 6, ferner mit einem zwischen dem Nocken (43) und dem Körper (42B) angeordneten Einstellschuh (45).

## Revendications

1. Scie comprenant .
• un ensemble de base (10) ;
• une table fixe (16) supportée par l'ensemble de base ;
• une table rotative (17) disposée de façon rotative sur la table fixe ; et
• un ensemble de scie (20) supporté par la table rotative ;
dans lequel une des tables fixe et rotative comporte une lèvre (16L) et l'autre des tables fixe et rotative comporte une bride (17L) chevauchant la lèvre, la lèvre étant disposée entre la bride et une plaque (41) disposée sur l'autre des tables fixe et rotative, **caractérisé par** un ensemble de plaque d'usure (40) disposé sur au moins une des tables fixe et rotative, l'ensemble de plaque d'usure comprenant un corps réglable (42B) .

2. Outil motorisé selon la revendication 1, dans lequel l'ensemble de plaque d'usure (40) comprend un corps (42B) et au moins une surface de plaque (42BP) fixée au corps.

3. Outil motorisé selon la revendication 2, dans lequel l'au moins une surface de plaque (42BP) entre en contact avec la lèvre (16L).

4. Outil motorisé selon la revendication 1, dans lequel l'ensemble de plaque d'usure (40) comprend un corps (42B) et au moins une bride (42F) fixée au corps.

5. Outil motorisé selon la revendication 4, dans lequel l'au moins une bride (42F) entre en contact avec la lèvre (16L).

6. Outil motorisé selon la revendication 1, dans lequel le corps (42B) peut être réglé en faisant tourner une came (43) disposée près du corps.

7. Outil motorisé selon la revendication 6, comprenant en outre un sabot de réglage (45) disposé entre la came (43) et le corps (42B).
